# EUROPEAN PATENT APPLICATION

(11) **EP 4 391 428 A1**
(43) Date of publication of application: **26.06.2024**
(21) Application number: 21953818.8
(22) Date of filing: 20.08.2021
(51) Int. Cl.: H04L 1/00

(54) **METHOD AND APPARATUS FOR MONITORING PHYSICAL DOWNLINK CONTROL CHANNEL, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Steinbauer, Florian
(86) International application number: PCT/CN2021/113868
(87) International publication number: WO 2023/019577

(57) **Abstract**

The present disclosure relates to a method and apparatus for monitoring a physical downlink control channel, and a storage medium. The method for monitoring the physical downlink control channel is applied to a terminal, and comprises: in response to the terminal being configured with a first search space set and a second search space set which have a link relationship, determining that multiple PDCCH candidates exist in a time domain position which overlaps with the monitoring time of a second PDCCH in the second search space set, and determining whether a first PDCCH candidate in the first search space set is monitored, where the first PDCCH candidate and the second PDCCH candidate have a link relationship. The PDCCH reception success rate can be improved according to the present disclosure.

## Description

### TECHNICAL FIELD

The present disclosure relates to the field of communications technology and, in particular, to method and apparatus for monitoring physical downlink control channel, and storage medium.

### BACKGROUND

In New Radio (NR) technology, for example, when the communication band is in frequency range 2, beam-based transmission and reception is required to ensure the coverage due to the fast fading of the high frequency channel.

In the related art, since it is considered that the terminal can only use one beam to receive the physical downlink control channel (PDCCH) sent by the network device, in the case of the monitor occasions corresponding to multiple PDCCH candidates overlapping, when the quasi-colocation (QCL) beam information of the Control Resource Set (CORESET) corresponding to multiple PDCCH candidates is different, e.g., when the QCL Type D is different, the terminal needs to determine a specified CORESET on the overlapping monitor occasions, and then use the QCL Type D corresponding to this specified CORESET to monitor the PDCCH corresponding to the specified CORESET, as well as other PDCCHs corresponding to other CORESET with the same QCL Type D as the specified CORESET, on the overlapping monitor occasions.

Since the terminal can only use one QCL Type D to monitor the PDCCH on the overlapping monitor occasion, the terminal will not be able to receive PDCCH monitored with different QCL Type Ds, i.e., the success rate of PDCCH transmission will be reduced. In Rel-17, the terminal will support the use of multiple (typically 2) QCL Type Ds to receive multiple PDCCHs at the same time, so one or more CORESETs need to be determined for the terminal to monitor multiple PDCCHs on the overlapping monitor occasions using the QCL Type Ds corresponding to the one or more CORESETs. However, how to determine the one or more CORESETs for monitoring PDCCHs is not addressed at present.

### SUMMARY

To overcome problems in the related art, the present disclosure provides method and apparatus for monitoring physical downlink control channel, and storage medium.

According to a first aspect of the embodiments of the present disclosure, there is provided a method for monitoring a physical downlink control channel, performed by a terminal, including:
determining, in response to the terminal being configured with a first search space set and a second search space set, and determining that a plurality of PDCCH candidates exist at a time domain location overlapping with monitor occasion of a second PDCCH candidate of the second search space set, whether or not a first PDCCH candidate of the first search space set is monitored, where the first search space set has a link relationship with the second search space set, and the first PDCCH candidate has a link relationship with the second PDCCH candidate;
monitoring the second PDCCH candidate based on a monitoring priority of the second PDCCH candidate among the plurality of PDCCH candidates.

In one embodiment, monitoring the second PDCCH candidate includes:
monitoring the second PDCCH candidate based on attribute of a quasi-colocation QCL type D of a control resource set corresponding to the second search space set.

In one embodiment, in response to determining that the first PDCCH candidate of the first search space set is monitored, the second PDCCH candidate has the highest monitoring priority among the plurality of PDCCH candidates.

In one embodiment, in response to determining that the first PDCCH candidate of the first search space set is not monitored, the second PDCCH candidate has the lowest monitoring priority among the plurality of PDCCH candidates.

In one embodiment, the monitoring priority of the second PDCCH candidate is determined based on the second search space set corresponding to the second PDCCH candidate.

In one embodiment, determining whether or not the first PDCCH candidate of the first search space set is monitored, includes: determining a monitoring priority of the first search space set, and determining whether or not the first PDCCH candidate of the first search space set is monitored based on the monitoring priority.

In one embodiment, the monitoring priority of the first search space set and/or the monitoring priority of the second search space set is determined based on attribute information of the search space set.

In one embodiment, the attribute information of the search space set includes at least one of the following:
a service cell index to which the search space set belongs, a type of the search space set, a search space set identification of the search space set, link relationship information of the search space set, and an identification of a search space set pair of two search space sets having a link relationship and including the search space set;
where the type of the search space set includes a common search space set or a UE-specific search space set; and the link relationship information of the search space set includes that the search space set does not have a link relationship with any of search space sets, or that the search space set has a link relationship with another search space set.

In one embodiment, the identification of the search space set pair of the two search space sets having a link relationship and including the search space set is a network device configuration, or an identification corresponding to a search space set having a smaller search space set identification in the two search space sets.

In one embodiment, the monitoring priority of the search space set determined based on the attribute information of the search space set satisfies at least one of the following:
the smaller a service cell index to which the search space set belongs, the higher the monitoring priority;
a monitoring priority of a common search space set is higher than a monitoring priority of a UE - specific search space set;
the smaller a search space set identification of the search space set, the higher the monitoring priority;
the smaller an identification of a search space set pair corresponding the search space set, the higher the monitoring priority;
a search space set having a link relationship with other search space set has a higher monitoring priority than a search space set not having a link relationship with other search space set;
a monitoring priority of a search space set configured with multiple transmission configuration indication states is higher than a monitoring priority of a search space set configured with only one transmission configuration indication state.

According to a second aspect of the embodiments of the present disclosure, there is provided a device for monitoring a physical downlink control channel, applied to a terminal, including:
a processing unit configured to determine, in response to the terminal being configured with a first search space set and a second search space set and determining that a plurality of PDCCH candidates exist at a time domain location overlapping with monitor occasion of a second PDCCH candidate of the second search space set, whether or not a first PDCCH candidate of the first search space set is monitored, where the first search space set has a link relationship with the second search space set, and the first PDCCH candidate has a link relationship with the second PDCCH candidate; and a monitoring unit configured to monitor the second PDCCH candidate based on a monitoring priority of the second PDCCH candidate among the plurality of PDCCH candidates.

In one embodiment, the monitoring unit monitors the second PDCCH candidate based on attribute of a quasi-colocation QCL type D of a control resource set corresponding to the second search space set.

In one embodiment, the monitoring unit determines, in response to determining that the first PDCCH candidate of the first search space set is monitored, that the second PDCCH candidate has the highest monitoring priority among the plurality of PDCCH candidates.

In one embodiment, the monitoring unit determines, in response to determining that the first PDCCH candidate of the first search space set is not monitored, that the second PDCCH candidate has the lowest monitoring priority among the plurality of PDCCH candidates.

In one embodiment, the monitoring priority of the second PDCCH candidate is determined based on the second search space set corresponding to the second PDCCH candidate.

In one embodiment, the monitoring unit determines whether or not the first PDCCH candidate of the first search space set is monitored by the following manner: determining a monitoring priority of the first search space set, and determining whether or not the first PDCCH candidate of the first search space set is monitored based on the monitoring priority.

In one embodiment, the monitoring priority of the first search space set and/or the monitoring priority of the second search space set is determined based on attribute information of the search space set.

In one embodiment, the attribute information of the search space set includes at least one of the following:
a service cell index to which the search space set belongs, a type of the search space set, a search space set identification of the search space set, link relationship information of the search space set, and an identification of a search space set pair of two search space sets having a link relationship and including the search space set;
where the type of the search space set includes a common search space set or a UE-specific search space set; and the link relationship information of the search space set includes that the search space set does not have a link relationship with any of search space sets, or that the search space set has a link relationship with another search space set.

In one embodiment, the identification of the search space set pair of the two search space sets having a link relationship and including the search space set is a network device configuration, or an identification corresponding to a search space set having a smaller search space set identification in the two search space sets.

In one embodiment, the monitoring priority of the search space set determined based on the attribute information of the search space set satisfies at least one of the following:
the smaller a service cell index to which the search space set belongs, the higher the monitoring priority;
a monitoring priority of a common search space set is higher than a monitoring priority of a UE-specific search space set;
the smaller a search space set identification of the search space set, the higher the monitoring priority;
the smaller an identification of a search space set pair corresponding the search space set, the higher the monitoring priority;
a search space set having a link relationship with other search space set has a higher monitoring priority than a search space set not having a link relationship with other search space set;
a monitoring priority of a search space set configured with multiple transmission configuration indication states is higher than a monitoring priority of a search space set configured with only one transmission configuration indication state.

According to a third aspect of the embodiments of the present disclosure, there is provided a device for monitoring a physical downlink control channel, including:
a processor; and a memory for storing processor executable instructions;
where the processor is configured to: perform the method for monitoring a physical downlink control channel according to the first aspect or any item of the first aspect.

According to a fourth aspect of the embodiments of the present disclosure, there is provided a storage medium, where the storage medium has instructions stored therein, when the instructions in the storage medium are executed by a processor of a terminal, the terminal is configured to perform the method for monitoring a physical downlink control channel according to the first aspect or any embodiment of the first aspect.

Embodiments of the present disclosure provide technical solutions that may include the following beneficial effect: in the case where a terminal is configured with a first search space set and a second search space set, where the first search space set has a link relationship with the second search space set and it is determined that there exists a plurality of PDCCH candidates at a time-domain location overlapping a monitor occasion of a second PDCCH candidate of the second search space set, whether a first PDCCH candidate of the first search space set having a link relationship with the second search space set is monitored or not is determined, and the second PDCCH candidate is monitored based on the monitoring priority of the second PDCCH candidate among the plurality of PDCCH candidates, thereby improving the success rate of the PDCCH reception.

It should be understood that the above general description and the later detailed description are only exemplary and explanatory and do not limit the present disclosure.

### BRIEF DESCRIPTION OF THE DRAWINGS

The accompanying drawings herein, which are incorporated into and form a part of the specification, illustrate embodiments consistent with the present disclosure and are used in conjunction with the specification to explain the principles of the present disclosure.
FIG. 1 is a schematic diagram of a wireless communication system illustrated according to an embodiment.
FIGS. 2A to 2C are flowcharts of a PDCCH monitoring method illustrated according to an embodiment.
FIG. 3 is a flowchart of a PDCCH monitoring method illustrated according to an embodiment.
FIG. 4 is a flowchart of a PDCCH monitoring method illustrated according to an embodiment.
FIG. 5 is a flowchart of a PDCCH monitoring method illustrated according to an embodiment.
FIG. 6 is a block diagram of a PDCCH monitoring device illustrated according to an embodiment.
FIG. 7 is a block diagram of a device for PDCCH monitoring illustrated according to an embodiment.

### DETAILED DESCRIPTION

Embodiments will be described herein in detail, examples of which are represented in the accompanying drawings. When the following description relates to the accompanying drawings, the same numerals in the different accompanying drawings indicate the same or similar elements unless otherwise indicated. The implementations described in the following embodiments do not represent all embodiments consistent with the present disclosure.

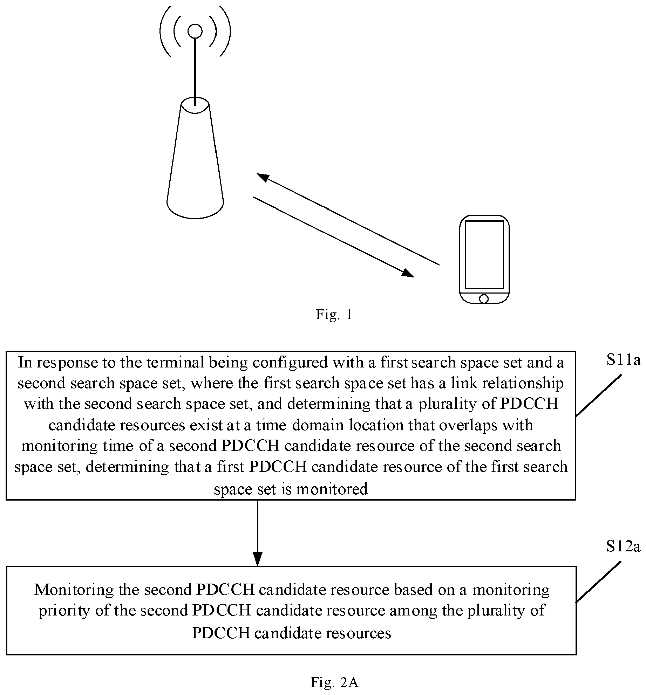

The PDCCH monitoring method provided by embodiments of the present disclosure can be applied to the wireless communication system shown in FIG. 1. Referring to FIG. 1, a terminal and a network device are included in the wireless communication system. The terminal is connected to the network device via wireless resources and transmits and receives data.

It is to be understood that the wireless communication system shown in FIG. 1 is for schematic illustration only, and other network devices may be included in the wireless communication system. For example, core network devices, wireless relay devices, and wireless backhaul devices may also be included, which are not depicted in FIG. 1. The embodiments of the present disclosure do not limit the number of network devices and the number of terminals included in the wireless communication system.

It is further to be understood that the wireless communication system according to the embodiments of the present disclosure is a network providing wireless communication functions. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single Carrier FDMA (SC-FDMA), Carrier Sense Multiple Access with Collision Avoidance. Different networks can be categorized as 2G (generation) networks, 3G networks, 4G networks, or future evolutionary networks such as 5G networks, which can also be referred to as New Radio (NR) networks, based on their capacity, rate, latency, and other factors. For ease of description, the present disclosure sometimes refers to wireless communication networks simply as networks.

Further, the network device involved in the present disclosure may also be referred to as a wireless access network device. The wireless access network device may be: a base station, an evolved node B (eNB), a home base station, an access point (AP) in a wireless fidelity (WIFI) system, a wireless relay node, a wireless backhaul node, a transmission point (TP) or transmission and reception point (TRP), etc., but also may be a gNB in a NR system, or, it may be a component or a part of a device that constitutes a base station. The network device may also be an in-vehicle device when it is a vehicle to everything (V2X) communication system. It should be understood that the embodiments of the present disclosure do not limit the specific technology and the specific device form used for the network device.

Further, a terminal involved in the present disclosure, which may also be referred to as a terminal device, user equipment (UE), mobile station (MS), mobile terminal (MT), etc., is a device that provides voice and/or data connectivity to a user. For example, the terminal may be a handheld device, an in-vehicle device, etc., having a wireless connectivity. Currently, some examples of terminals are: a smart phone (Mobile Phone), a pocket personal computer (PPC), a palmtop computer, a personal digital assistant (PDA), a laptop computer, a tablet computer, a wearable device, or an in-vehicle device, among others. In addition, the terminal device may also be an in-vehicle device when it is a vehicle to everything (V2X) communication system. It should be understood that the embodiments of the present disclosure do not limit the specific technology and the specific device form used for the terminal.

Data transmission between the network device and the terminal is performed based on a beam in the present disclosure. In Rel-15/16, in the process of beam-based data transmission, the terminal can only use one beam to receive the PDCCH sent by the network device, so in the case of the monitor occasions corresponding to a plurality of PDCCH candidates overlapping, when the beam information of the CORESETs corresponding to the plurality of PDCCH candidates is different, e.g., when the QCL Type Ds are different, the terminal needs to determine a specified CORESET on the overlapping monitor occasions, and then use the QCL Type D corresponding to the specified CORESET to monitor the PDCCH corresponding to the specified CORESET, as well as other PDCCHs corresponding to other CORESET with the same QCL Type D as the specified CORESET on the overlapping monitor occasions. That is, on the overlapping monitor occasions, the terminal can only use one QCL Type D to monitor the PDCCH, therefore, the terminal will not be able to receive PDCCHs monitored with different QCL Type Ds, i.e., the PDCCH transmission success rate is reduced. In Rel-17, the terminal will support the use of multiple (typically 2) QCL Type Ds to receive multiple PDCCHs at the same time, so one or more CORESETs can be determined on overlapping monitor occasions, and the terminal can use one or more QCL Type Ds corresponding to the one or more CORESETs to monitor multiple PDCCHs on overlapping monitor occasions, in order to improve the success rate of the PDCCH reception.

In the related art, search space sets (SS sets) having a link relationship may be configured for a terminal and a determination may be made as to whether to select the QCL Type D of the CORESET corresponding to the SS sets having the link relationship to monitor the PDCCH candidate at the overlapping time. Two SS sets having a link relationship may be understood to be different SS sets having candidate resources for PDCCH repetition. For example, the two SS sets having a link relationship include a first SS set and a second SS set, the first SS set includes a first PDCCH candidate, and the second SS set includes a second PDCCH candidate. The first PDCCH candidate in the first SS set and the second PDCCH candidate in the second SS set are used for PDCCH repetition.

When the first SS set and the second SS set are used in a time-division multiplexing (TDM) manner, where the first search space set has a link relationship with the second search space set, due to the different timing of the first PDCCH candidate and the second PDCCH candidate, the following situations are possible:
- Case 1: The first PDCCH candidate does not overlap with the PDCCH candidate of other SS set and the second PDCCH candidate overlaps with the PDCCH candidate of other SS set.
- Case 2: The first PDCCH candidate overlaps with the PDCCH candidate of other SS set and the second PDCCH candidate does not overlap with the PDCCH candidate of other SS set.
- Case 3: The first PDCCH candidate overlaps with the PDCCH candidate of the first SS set, and the second PDCCH candidate overlaps with the PDCCH candidate of the second SS set.

The following situations further exist for case 3:
- Case 3-1: The first SS set and the second SS set are the same.
- Case 3-2: The first SS set and the second SS set are different.

For each of the above cases, when, on the monitor occasion of the second PDCCH candidate of the second SS set, there are multiple PDCCH candidate of SS set overlapping in time domain, whether the second PDCCH candidate needs to be monitored or not is an issue to be further optimized.

In embodiments of the present disclosure, when two PDCCH candidates (the first PDCCH candidate and the second PDCCH candidate) have a link relationship, where the two PDCCH candidates are included in two SS sets (the first SS set and the second SS set) for the terminal and the two SS sets have a link relationship, if it is determined that there are multiple PDCCH candidate at a time domain location overlapping with the monitor occasion of the second PDCCH candidate, then it is determined whether the first PDCCH candidate is monitored, and it is determined whether the second PDCCH candidate is monitored.

In one embodiment, a monitoring priority of the second PDCCH candidate among the plurality of PDCCH candidates may be determined based on whether the first PDCCH candidate is monitored or not. The second PDCCH candidate is monitored based on the monitoring priority of the second PDCCH candidate among the plurality of PDCCH candidates, to determine whether the second PDCCH candidate is monitored.

The monitoring priority involved in embodiments of the present disclosure refers to a priority of being monitored at an overlapping time domain location. It is to be understood that the higher the monitoring priority, the higher the likelihood of being monitored. The lower the monitoring priority, the lower the likelihood of being monitored.

In an embodiment of the present disclosure, a terminal may monitor a second PDCCH candidate based on a monitoring priority of the second PDCCH candidate among a plurality of PDCCH candidates, in the event that the first PDCCH candidate is being monitored or not being monitored.

FIG. 2A is a flowchart of a PDCCH monitoring method illustrated according to an embodiment. As shown in FIG. 2A, the PDCCH monitoring method is performed by a terminal, and includes the following steps.

In step S11a, in response to the terminal being configured with a first SS set and a second SS set, where the first search space set has a link relationship with the second search space set, and determining that a plurality of PDCCH candidates exist at a time domain location that overlaps with monitor occasion of a second PDCCH candidate of the second SS set, it is determined that a first PDCCH candidate of the first SS set is monitored.

In step S12a, the second PDCCH candidate is monitored based on a monitoring priority of the second PDCCH candidate among the plurality of PDCCH candidates.

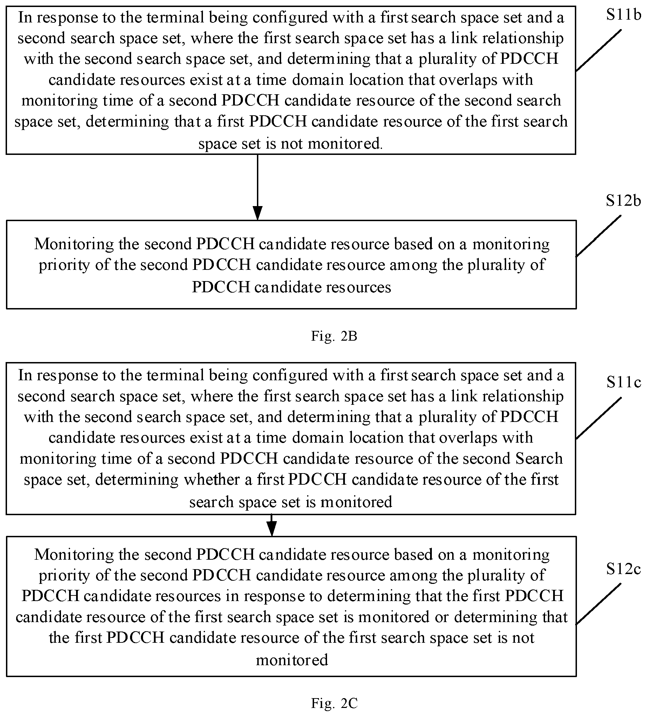

FIG. 2B is a flowchart of a PDCCH monitoring method illustrated according to an embodiment. As shown in FIG. 2B, the PDCCH monitoring method is performed by a terminal, and includes the following steps.

In step S11b, in response to the terminal being configured with a first SS set and a second SS set, where the first search space set has a link relationship with the second search space set, and determining that a plurality of PDCCH candidates exist at a time domain location that overlaps with monitor occasion of a second PDCCH candidate of the second SS set, it is determined that a first PDCCH candidate of the first SS set is not monitored.

In step S12b, the second PDCCH candidate is monitored based on a monitoring priority of the second PDCCH candidate among the plurality of PDCCH candidates.

In yet another embodiment of the present disclosure, the terminal may determine whether the second PDCCH candidate is monitored based on whether the first PDCCH candidate is monitored. That is, the terminal may first perform a determination of whether the first PDCCH candidate is being monitored, and then perform a determination of whether the second PDCCH candidate is being monitored based on the determination result of whether the first PDCCH candidate is being monitored.

FIG. 2C is a flowchart of a PDCCH monitoring method illustrated according to an embodiment. As shown in FIG. 2C, the PDCCH monitoring method is performed by a terminal and includes the following steps.

In step S 11c, in response to the terminal being configured with a first SS set and a second SS set, where the first search space set has a link relationship with the second search space set, and determining that a plurality of PDCCH candidates exist at a time domain location that overlaps with monitor occasion of a second PDCCH candidate of the second SS set, it is determined whether a first PDCCH candidate of the first SS set is monitored.

In step S12c, the second PDCCH candidate is monitored based on a monitoring priority of the second PDCCH candidate among the plurality of PDCCH candidates in response to determining that the first PDCCH candidate of the first SS set is monitored or determining that the first PDCCH candidate of the first SS set is not monitored.

It will be appreciated that the first PDCCH candidate has a link relationship with the second PDCCH candidate in the embodiments of the present disclosure related to FIGS. 2A to 2C above. In embodiments of the present disclosure, the first PDCCH candidate having a link relationship with the second PDCCH candidate can be understood as the first PDCCH candidate and the second PDCCH candidate being used for PDCCH repetition. The temporal sequential relationship between the first PDCCH candidate and the second PDCCH candidate may be such that the first PDCCH candidate precedes, or the second PDCCH candidate precedes, or the first PDCCH candidate and the second PDCCH candidate can overlap in the time domain.

The embodiments of the present disclosure are mainly illustrated with an example of the first PDCCH candidate being ahead in time relative to the second PDCCH candidate. In the embodiments of the present disclosure, the second PDCCH candidate is monitored based on the QCL Type D attribute of the CORESET corresponding to the second SS Set.

The QCL Type D is understood to be a spatial reception parameter, sometimes referred to as a beam.

In an embodiment, in the case that two PDCCH candidates of the terminal have a link relationship, when the QCL Type Ds configured for CORESET corresponding to a plurality of PDCCH candidates required to be monitored on the overlapping PDCCH monitoring occasion of the second PDCCH candidate are same or different, the terminal determines one or more specified CORESETs, and monitors the PDCCH candidates of the specified CORESETs and the PDCCH candidates of other CORESETs with the same QCL Type D as the specified CORESETs on the overlapping PDCCH monitoring occasions, thereby improving the success rate of the PDCCH reception.

In the embodiments of the present disclosure, the terminal determines that the first SS set and the second SS set are two SS sets having a link relationship. When there are multiple PDCCH candidates of SS set overlapping in time domain at the monitor occasion of the second PDCCH candidate of the second SS set, the terminal determines whether to monitor the second PDCCH candidate of the second SS set or not based on whether the first PDCCH candidate of the first SS set is monitored or not. That is, a monitoring priority of the second PDCCH candidate among the plurality of PDCCH candidates is set based on whether the first PDCCH candidate of the first SS set is monitored or not.

In one embodiment, the first PDCCH candidate has a link relationship with the second PDCCH candidate. Therefore, in the case where it is determined that the first PDCCH candidate of the first SS set is monitored, then, for the performance of the PDCCH repetition, the second PDCCH candidate also needs to be monitored.

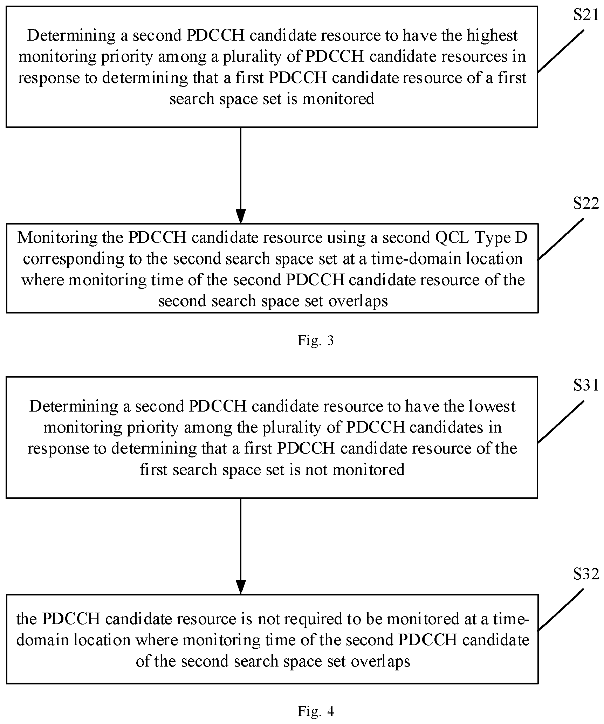

FIG. 3 is a flowchart of a PDCCH monitoring method illustrated according to an embodiment. As shown in FIG. 3, the PDCCH monitoring method is performed by a terminal and includes the following steps.

In step S21, a second PDCCH candidate is determined to have the highest monitoring priority among a plurality of PDCCH candidates in response to determining that a first PDCCH candidate of a first SS set is monitored.

In step S22, the PDCCH candidate is monitored using a second QCL Type D corresponding to the second SS set at a time-domain location where monitor occasion of the second PDCCH candidate of the second SS set overlaps.

In embodiments of the present disclosure, in response to determining that the first PDCCH candidate of the first SS set is monitored, the second PDCCH candidate is determined to have the highest monitoring priority among the plurality of PDCCH candidates. That the second PDCCH candidate has the highest monitoring priority among the plurality of PDCCH candidates may be understood to mean that the second PDCCH candidate of the second SS set needs to be monitored. The second PDCCH candidate of the second SS set needs to be monitored, i.e., in the overlapping time domain, the PDCCH candidate needs to be monitored using the second QCL Type D corresponding to the second SS set. The PDCCH candidate to be monitored using the second QCL Type D corresponding to the second SS set includes the PDCCH candidate of the second SS set and PDCCH candidate of the other SS set. The QCL Type D of the other SS set is the same as the second QCL Type D.

In yet another embodiment of the present disclosure, in response to determining that the first PDCCH candidate of the first SS set is monitored, it is determined that the second PDCCH candidate has the highest monitoring priority among the plurality of PDCCH candidates. That the second PDCCH candidate has the highest monitoring priority among the plurality of PDCCH candidates may be understood to mean that the second PDCCH candidate of the second SS set needs to be monitored. However, when there is a plurality of first PDCCH candidates being monitored, and each first PDCCH candidate has a corresponding second PDCCH candidate, if the plurality of second PDCCH candidates overlap in the time domain, then the monitoring priorities of the plurality of second PDCCH candidates need to be further determined. The method of further determining the monitoring priorities of the plurality of second PDCCH candidates includes a first item and/or a second item as follows:
The first item: it is determined based on the monitoring priorities of the one or more first SS sets corresponding to the plurality of first PDCCH candidates. The second PDCCH candidate corresponding to the first PDCCH candidate having the largest monitoring priority corresponding to the first SS set needs to be monitored. The monitoring priority of the first SS set is determined based on attribute information of the first SS set.

The second item: it is determined based on the monitoring priorities of one or more second SS sets corresponding to the plurality of second PDCCH candidates. The monitoring priority of the second SS set is determined based on the attribute information of the second SS set. The second PDCCH candidate of the second SS set needs to be monitored i.e., in the overlapping time domain, the PDCCH candidate needs to be monitored using the second QCL Type D corresponding to the second SS set. The PDCCH candidate to be monitored using the second QCL Type D corresponding to the second SS set includes the PDCCH candidate of the second SS set and the PDCCH candidate of the other SS set. The QCL Type D of the other SS set is the same as the second QCL Type D.

In another embodiment of the present disclosure, the first PDCCH candidate has a link relationship with the second PDCCH candidate. In the case where it is determined that the first PDCCH candidate of the first SS set is not monitored, even if the second PDCCH candidate is monitored, the performance of the PDCCH repetition is not guaranteed, and therefore, the second PDCCH candidate does not need to be monitored.

FIG. 4 is a flowchart of a PDCCH monitoring method illustrated according to an embodiment. As shown in FIG. 4, the PDCCH monitoring method is performed by a terminal and includes the following steps.

In step S31, a second PDCCH candidate is determined to have the lowest monitoring priority among the plurality of PDCCH candidates in response to determining that a first PDCCH candidate of the first SS set is not monitored.

In step S32, the PDCCH candidate is not required to be monitored at a time-domain location where monitor occasion of the second PDCCH candidate of the second SS set overlaps.

In embodiments of the present disclosure, in response to determining that the first PDCCH candidate of the first SS set is not monitored, it is determined that the second PDCCH candidate has the lowest monitoring priority among the plurality of PDCCH candidates. That the second PDCCH candidate has the lowest monitoring priority among the plurality of PDCCH candidates may be understood to mean that the second PDCCH candidate of the second SS set does not need to be monitored. The second PDCCH candidate of the second SS set does not need to be monitored i.e., in the overlapping time domain, there is no need to monitor the PDCCH candidate of the second SS set and the PDCCH candidate of the other SS set with the same QCL Type D as the second QCL Type D using the second QCL Type D corresponding to the second SS set.

In embodiments of the present disclosure, the terminal determines a monitoring priority of the second PDCCH candidate among the plurality of PDCCH candidates based on whether or not the first PDCCH candidate is monitored, and thus determines whether or not the one or more specified CORESETs need to be determined, and monitor the PDCCH candidate of the specified CORESET and the PDCCH candidates of other CORESETs with the same QCL Type D as the specified CORESET on an overlapping PDCCH monitoring occasion, thereby improving the success rate of the PDCCH reception.

In yet another embodiment of the present disclosure, it is determined that whether a first PDCCH candidate is monitored or not based on a monitoring priority of the first PDCCH candidate. It is determined that whether a second PDCCH candidate is monitored or not based on a monitoring priority of the second PDCCH candidate. In determining whether the PDCCH candidate is monitored, a monitoring priority of the PDCCH candidate may be determined based on the attribute information of the SS set to which the PDCCH candidate belongs, and whether the PDCCH candidate is monitored may be determined based on the monitoring priority of the PDCCH candidate.

For descriptive convenience, the following embodiments of the present disclosure illustrate the process of determining the monitoring priority of the PDCCH candidate without distinguishing between the first PDCCH candidate and the second PDCCH candidate. That is, the PDCCH candidate involved in the following embodiments may be a first PDCCH candidate or a second PDCCH candidate. It is to be understood that the SS set involved in the following embodiments also does not distinguish between a first SS set corresponding to the first PDCCH candidate, and a second SS set corresponding to the second PDCCH candidate. For the determination of the monitoring priority of the first PDCCH candidate, the SS set involved is the first SS set. For the determination of the monitoring priority of the second PDCCH candidate, the SS set involved is the second SS set.

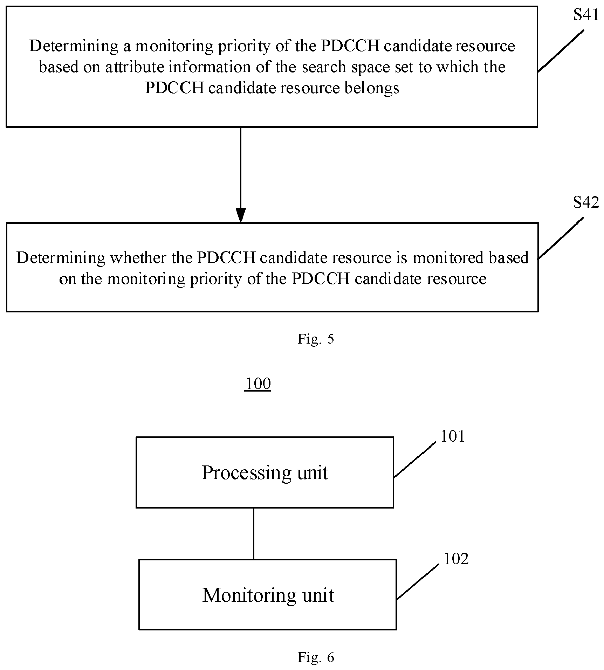

FIG. 5 is a flowchart of a PDCCH monitoring method illustrated according to an embodiment. As shown in FIG. 5, the PDCCH monitoring method is performed by a terminal and includes the following steps.

In step S41, a monitoring priority of the PDCCH candidate is determined based on attribute information of the SS set to which the PDCCH candidate belongs.

In step S42, whether the PDCCH candidate is monitored is determined based on the monitoring priority of the PDCCH candidate.

The monitoring priority of the first PDCCH candidate and/or the monitoring priority of the second PDCCH candidate need to be determined in embodiments of the present disclosure.

For example, in determining whether the first PDCCH candidate is monitored, a monitoring priority of the first SS set may be determined based on the attribute information of the first SS set, and whether the first PDCCH candidate of the first SS set is monitored may be determined based on the monitoring priority of the first SS set.

In determining whether the second PDCCH candidate is monitored, a monitoring priority of the second SS set may be determined based on the attribute information of the second SS set, and whether the second PDCCH candidate of the second SS set is monitored may be determined based on the monitoring priority of the second SS set. The attribute information of the SS set involved above for determining the monitoring priority of the PDCCH candidate includes at least one of the following: a serving cell index to which the SS set belongs, a type of the SS set, an SS set identification (ID), link relationship information of the SS set, and an ID of the SS set pair of two SS sets with a link relationship and including the SS set.

The terminal may be configured with one or more serving cells, and the serving cell is configured with a serving cell index. The serving cell index to which the SS set belongs can be understood as the serving cell index corresponding to the one or more serving cells configured for the terminal.

The type of SS set is configured to indicate whether the SS set is a Common Search space set (CSS set) or a UE-specific Search space set (USS set).

SS set ID can be understood as the sequential number of the SS set. For example, the ID of SS set#0 is #0.

The link relationship information of the SS set includes the SS set does not have a link relationship with any SS set, or the SS set has a link relationship with another SS set.

The ID of the SS set pair may be configured by a network device, such as a base station, or may be an ID corresponding to the SS set with the smaller SS set ID among the two SS sets included in the SS set pair.

In embodiments of the present disclosure, the CORESET corresponding to a plurality of PDCCH candidates that the terminal needs to monitor on an overlapping PDCCH monitoring occasion may be configured with a CSS set, and the CSS set corresponds to a CSS set index. The CORESET corresponding to a plurality of PDCCH candidates that the terminal needs to monitor on an overlapping PDCCH monitoring occasion may be configured with a USS set, and the USS set corresponds to a USS set index. The ID of the SS set pair can also be interpreted as the index of the SS set pair.

In an example, among the multiple CSS set pairs having a link relationship, the index of each CSS set pair is the index of the CSS set having the smaller CSS set index. In an example of the present disclosure, for a CSS set that is one of two CSS sets having a link relationship, if the two CSS sets having a link relationship are configured as one CSS set pair, the index of this CSS set pair is the same as the index of the CSS set having the smaller index in the CSS set pair. Alternatively, the CSS sets with the link relationship are also treated as independent CSS sets, i.e., the index is determined based on the CSS Set ID of the CSS set itself.

Further, for CSS sets that do not have a link relationship, the index is determined based on the CSS Set ID of the CSS set itself.

In embodiments of the present disclosure, the CSS set of the CORESET corresponding to the plurality of PDCCH candidates that the terminal needs to monitor on the overlapping PDCCH monitoring occasion may be configured with one or more transmission configuration indication states (TCI state). For the CSS set configured with multiple TCI states, the monitoring priority is determined based on its own index. Or, for the CSS set configured with multiple TCI states, its monitoring priority is higher than that of a CSS set configured with only one TCI state, where the TCI state of the CSS set is the TCI state of the CORESET associated with the CSS set.

In an example, among the multiple USS set pairs having a link relationship, the index of each USS set pair is the index of the USS set having the smaller USS set index. In an example of the present disclosure, for a USS set that is one of two USS sets having a link relationship, if the two USS sets having a link relationship are configured as one USS set pair, the index of this USS set pair is the same as the index of the USS set having the smaller index in the USS set pair. Alternatively, the USS sets with the link relationship are also treated as independent USS sets, i.e., the index is determined based on its own Set ID.

Further, for a USS set that does not have a link relationship, the index is determined based on its own Set ID.

In the embodiments of the present disclosure, in the case where the USS set of CORESET corresponding to the multiple PDCCH candidates that the terminal needs to monitor on the overlapping PDCCH monitoring occasion is configured with one or more TCI states, the monitoring priority of the CSS set that is configured with multiple TCI states is determined based on its own index. Or, for the USS set configured with multiple TCI states, its monitoring priority is higher than the monitoring priority of a USS set configured with only one TCI state. The TCI state of the USS set is the TCI state of the CORESET associated with the USS set.

In the PDCCH monitoring method provided by embodiments of the present disclosure, when determining the monitoring priority of the SS set based on the attribute information of the SS set, one or more of the following ways may be adopted.

Way 1: The smaller the serving cell index to which the SS set belongs, the higher the monitoring priority of the SS set.

Way 2: The monitoring priority of the CSS set is higher than the monitoring priority of the USS set.

Way 3: The smaller the SS set ID of the SS set, the higher the monitoring priority of the SS set.

Way 4: The smaller the ID of the SS set pair corresponding to the SS set, the higher the monitoring priority of the SS set.

Way 5: The monitoring priority of an SS set that has link relationship with other SS sets is higher than that of an SS set that does not have link relationship with other SS sets.

Way 6: The monitoring priority of an SS set configured with multiple TCI states is higher than the monitoring priority of an SS set configured with only one TCI state.

Based on the above ways of determining the monitoring priority of the SS set, the following examples may be included in the embodiments of the present disclosure when determining the monitoring priority of the SS set:

In an example, among a plurality of CSS sets having a link relationship, the monitoring priority is determined based on an index of each CSS set pair, and the smaller CSS set index in the CSS set pair is determined in turn, and the smaller the index of the CSS set pair, the higher the monitoring priority.

In an example, a CSS set having a link relationship with other CSS sets has a higher monitoring priority than a USS set having a link relationship with other USS sets.

In an example, a CSS set configured with a plurality of TCI states has a higher monitoring priority than a CSS set configured with only one TCI state.

In an example, among a plurality of USS sets having a link relationship, the monitoring priority is determined based on an index of each USS set pair, and the smaller USS set index in the USS set pair is determined in turn, and the smaller the index of the USS set pair, the higher the monitoring priority.

In an example, a USS set having a link relationship with other USS set has a higher monitoring priority than a USS set having a link relationship with other USS set.

In an example, a USS set having a link relationship with other USS sets has a higher monitoring priority than an independent CSS set, and/or a USS set having a link relationship with other USS sets has a lower monitoring priority than an independent CSS set. The independent CSS set refers to a CSS set that does not have a link relationship with other CSS sets, and the independent USS set refers to a USS set that does not have a link relationship with other USS sets.

In an example, the monitoring priority of a USS set configured with multiple TCI states is higher than the monitoring priority of a USS set configured with one TCI state.

In an example, the monitoring priority of a QCL Type D of a CORESET configured with two TCI states is higher than the monitoring priority of a QCL Type D of a CORESET configured with one TCI state.

In an example, CSS#0 has the highest monitoring priority.

In an example, the index of a CSS set with a small index in the CSS set pair is greater than the index of an independent CSS set, and the monitoring priority of the CSS set pair is higher than the monitoring priority of the independent CSS set.

In an example, the index of the USS set with a small index in the USS set pair is greater than the index of the independent USS set, and the monitoring priority of the USS set pair is also higher than the monitoring priority of the independent USS set. Further, in embodiments of the present disclosure, the monitoring priority of the SS set is determined based on the attribute information of the SS set. When monitoring the PDCCH candidate based on the monitoring priority of the SS set, one or more specified CORESETs may be determined, and the PDCCH of the specified CORESET and the PDCCHs of other CORESETs with the same QCL Type D as the specified CORESET are monitored on an overlapping PDCCH monitoring occasion. Or, the terminal determines one or more specified QCL Type Ds and monitors PDCCHs of CORESETs with the same QCL Type D as the specified QCL Type D on an overlapping PDCCH monitoring occasion.

The terminal may be configured with one or more serving cells.

In an example, the embodiment of the present disclosure may determine the specified CORESET based on a serving cell index.

In response to the terminal being configured with one serving cell, among the CORESETs corresponding to the plurality of PDCCH candidates, it is determined whether or not there exists a CORESET including a CSS set. If a CORESET including a CSS set exists, then the specified CORESET is determined based on the index of the CORESET including the CSS set. If a CORESET including a CSS set does not exist, the specified CORESET is determined based on the index of the CORESET including a USS set.

In response to the terminal being configured with a plurality of serving cells, among the CORESETs corresponding to the plurality of PDCCH candidates, it is determined whether or not there exists a CORESET including a CSS set. If a CORESET including a CSS set exists, then a serving cell with the smallest serving cell index is selected in the CORESET including the CSS set, and the CORESET corresponding to the CSS set with the smallest CSS set index in the serving cell with the smallest serving cell index is determined to be the specified CORESET, and/or the CORESET corresponding to CSS set having a link relationship with other CSS sets in the serving cell with the smallest serving cell index is determined as the specified CORESET. If a CORESET including a CSS set does not exist, then a serving cell with the smallest serving cell index is selected in the CORESET including a USS set, and the CORESET corresponding to the USS set with the smallest USS set index in the serving cell with the smallest serving cell index is determined to be the specified CORESET, and/or the CORESET corresponding to USS set having a link relationship with other USS sets in the serving cell with the smallest serving cell index is determined as the specified CORESET.

Embodiments of the present disclosure provide a PDCCH monitoring method that determines one or more QCL Type Ds corresponding to one or more CORESETs based on whether or not the PDCCH candidate having a link relationship is monitored when determining that a plurality of PDCCH candidates overlap on the monitor occasion, and monitor the PDCCH on the overlapping occasion, which can improve success rate of the PDCCH repetition.

It is to be noted that those skilled in the art may understand that the various implementations/examples involved above in the embodiments of the present disclosure are applicable to determining whether a first PDCCH candidate is monitored or not, and also applicable to determining whether a second PDCCH candidate is monitored or not. And the embodiments for determining whether the first PDCCH candidate is monitored and the embodiments for determining whether the second PDCCH candidate is monitored may be the same or different, i.e., the method for determining the monitoring priority may be used independently.

It is to be noted that those skilled in the art may understand that the various embodiments/examples involved above in the embodiments of the present disclosure may be used in conjunction with the foregoing embodiments or may be used independently. Whether used alone or together with the aforementioned embodiments, the realization principles are similar. In the embodiments of the present disclosure, some embodiments are illustrated in embodiments used together. Of course, those skilled in the art can understand that such an illustrative description is not a limitation of the embodiments of the present disclosure.

Based on the same idea, the present disclosure embodiments also provide a PDCCH monitoring device.

It is to be understood that the PDCCH monitoring device provided in the embodiments of the present disclosure, in order to realize the above-described functions, includes a hardware structure and/or a software module corresponding to the execution of respective functions. In combination with the units and algorithmic steps of the various examples disclosed in the embodiments of the present disclosure, the embodiments of the present disclosure can be realized in the form of hardware or a combination of hardware and computer software. Whether a particular function is performed by hardware or computer software driving hardware depends on the particular application and design constraints of the technical solution. Those skilled in the art may use a different approach for each particular application to implement the described functionality, but such implementations should not be considered outside the scope of the technical solutions of the embodiments of the present disclosure.

FIG. 6 is a block diagram of a PDCCH monitoring device illustrated according to an embodiment. Referring to FIG. 6, the PDCCH monitoring device 100 includes a processing unit 101 and a monitoring unit 102.

The processing unit 101 is configured to determine, in response to a terminal being configured with a first SS set and a second SS set, and determining that a plurality of PDCCH candidates exists at a time-domain location that overlaps with monitor occasion of a second PDCCH candidate of the second SS set, that a first PDCCH candidate of the first SS set is monitored or not, where the first search space set has a link relationship with the second search space set, and the first PDCCH candidate has a link relationship with the second PDCCH candidate. The monitoring unit 102 is configured to monitor the second PDCCH candidate based on a monitoring priority of the second PDCCH candidate among the plurality of PDCCH candidates.

In one embodiment, the monitoring unit 102 monitors the second PDCCH candidate based on the attribute of a quasi-colocation QCL Type D of the control resource set corresponding to the second SS set.

In one embodiment, in response to the processing unit 101 determining that a first PDCCH candidate of the first SS set is monitored, the monitoring unit 102 determines that the second PDCCH candidate has the highest monitoring priority among the plurality of PDCCH candidates.

In one embodiment, in response to determining that the first PDCCH candidate of the first SS set is not monitored, the monitoring unit 102 determines that the second PDCCH candidate has the lowest monitoring priority among the plurality of PDCCH candidates.

In one embodiment, the monitoring priority of the second PDCCH candidate is determined based on a second SS set corresponding to the second PDCCH candidate.

In one embodiment, the monitoring unit 102 determines whether the first PDCCH candidate of the first SS set is monitored in the following manner: determining a monitoring priority of the first SS set, and determining whether the first PDCCH candidate of the first SS set is monitored based on the monitoring priority.

In one embodiment, the monitoring priority of the first SS set and/or the second SS set is determined based on attribute information of the SS set.

In one embodiment, the attribute information of the SS set includes at least one of the following:
a service cell index to which the SS set belongs, a type of the SS set, an SS set identification of the SS set, link relationship information of the SS set, and an ID of the SS set pair of two SS sets having a link relationship and including the SS set;
where the type of the SS set includes a CSS set or a USS set; the link relationship information of the SS set includes that the SS set does not have a link relationship with any of the SS sets, or that the SS set has a link relationship with another SS set.

In one embodiment, the identification of the SS set pair of the two SS sets having a link relationship and including the SS set is a network device configuration, or an identification corresponding to the SS set having the smaller SS set identification in the two SS sets.

In one embodiment, the monitoring priority of the SS set determined based on the attribute information of the SS set satisfies at least one of the following:
the smaller the service cell index to which the SS set belongs, the higher the monitoring priority;
the monitoring priority of the CSS set is higher than the monitoring priority of the USS set;
the smaller the SS set identification of the SS set, the higher the monitoring priority;
the smaller the identification of the SS set pair corresponding to the SS set, the higher the monitoring priority;
the monitoring priority of an SS set that has a link relationship with other SS sets is higher than that of an SS set that does not have a link relationship with other SS sets;
the monitoring priority of an SS set configured with multiple TCI states is higher than the monitoring priority of an SS set configured with only one TCI state.

With respect to the device in the above embodiment, the specific manner in which each module performs an operation has been described in detail in the embodiments relating to the method, and will not be described in detail herein.

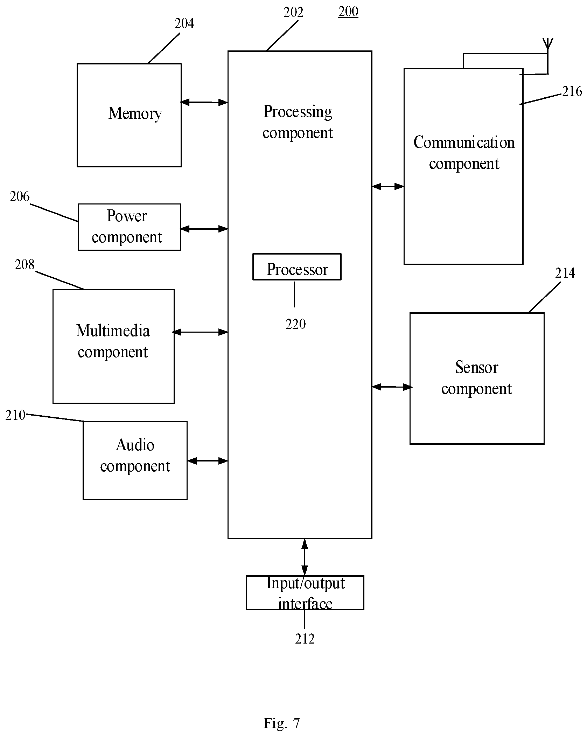

FIG. 7 is a block diagram of a device 200 for PDCCH monitoring illustrated according to an embodiment. For example, the device 200 may be a cell phone, a computer, a digital broadcast terminal, a message transceiver device, a game console, a tablet device, a medical device, a fitness device, a personal digital assistant, and the like.

Referring to FIG. 7, the device 200 may include one or more of the following components: a processing component 202, a memory 204, a power component 206, a multimedia component 208, an audio component 210, an input/output (I/O) interface 212, a sensor component 214, and a communication component 216.

The processing component 202 generally controls the overall operation of the device 200, such as operations associated with displays, telephone calls, data communications, camera operations, and recording operations. The processing component 202 may include one or more processors 220 to execute instructions to accomplish all or some of the steps of the method described above. In addition, the processing component 202 may include one or more modules to facilitate interaction between the processing component 202 and other components. For example, the processing component 202 may include a multimedia module to facilitate interaction between the multimedia component 208 and the processing component 202.

The memory 204 is configured to store various types of data to support operation at the device 200. Examples of such data include instructions for any application or method operated on the device 200, contact data, phone book data, messages, pictures, videos, etc. The memory 204 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, a disk or optical disk.

The power component 206 provides power to the various components of the device 200. The power component 206 may include a power management system, one or more power sources, and other components associated with generating, managing, and distributing power for the device 200.

The multimedia component 208 includes a screen providing an output interface between said device 200 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes and gestures on the touch panel. The touch sensors may not only sense the boundaries of a touch or swipe action, but also detect the duration and pressure associated with the touch or swipe operation. In some embodiments, the multimedia component 208 includes a front camera and/or a rear camera. The front camera and/or the rear camera may receive external multimedia data when the device 200 is in an operational mode, such as a shooting mode or a video mode. Each of the front camera and the rear camera may be a fixed optical lens system or has a focal length and optical zoom capability.

The audio component 210 is configured to output and/or input audio signals. For example, the audio component 210 includes a microphone (MIC) that is configured to receive external audio signals when the device 200 is in an operational mode, such as a call mode, a recording mode, and a voice recognition mode. The received audio signals may be further stored in memory 204 or sent via communication component 216. In some embodiments, the audio component 210 further includes a speaker for outputting audio signals.

The I/O interface 212 provides an interface between the processing component 202 and a peripheral interface module. The peripheral interface module may be a keypad, click wheel, buttons, etc. These buttons may include, but are not limited to: a home button, a volume button, a start button, and a lock button.

The sensor component 214 includes one or more sensors for providing status assessment of various aspects of the device 200. For example, the sensor component 214 may detect an open/closed state of the device 200, the relative positioning of components, such as the components being the display and keypad of the device 200. The sensor component 214 may also detect a change in the position of the device 200 or of a component of the device 200, the presence or absence of user contact with the device 200, the orientation or acceleration/deceleration of the device 200 and a change in temperature of the device 200. The sensor component 214 may include a proximity sensor configured to detect the presence of a nearby object in the absence of any physical contact. The sensor component 214 may also include an optical sensor, such as a CMOS or CCD image sensor, for use in imaging applications. In some embodiments, the sensor component 214 may also include an accelerometer sensor, a gyroscope sensor, a magnetic sensor, a pressure sensor, or a temperature sensor.

The communication component 216 is configured to facilitate communication between the device 200 and other devices by wired or wireless means. The device 200 may access a wireless network based on a communication standard such as WiFi, 2G or 3G, or a combination thereof. In an embodiment, the communication component 216 receives broadcast signals or broadcast-related information from an external broadcast management system via a broadcast channel. In an embodiment, the communication component 216 further includes a near field communication (NFC) module to facilitate short range communication. For example, the NFC module may be implemented based on Radio Frequency Identification (RFID) technology, Infrared Data Association (IrDA) technology, Ultra Wide Band (UWB) technology, Bluetooth (BT) technology and other technologies.

In an embodiment, the device 200 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electrically specified components for performing the methods described above.

In an embodiment, there is also provided a non-transitory computer-readable storage medium including instructions, such as a memory 204 including instructions. The instructions are executable by a processor 220 of the device 200 for accomplishing the method. For example, the non-transitory computer readable storage medium may be a ROM, random access memory (RAM), CD-ROM, magnetic tape, floppy disk, and optical data storage device, among others.

It is further understood that "more than one" in the present disclosure refers to two or more, and other quantifiers are similar. The expression "and/or" describes an association relationship of the associated objects, indicating that three relationships may exist, e.g., A and/or B may indicate: A alone, both A and B, and B alone. The character "/" generally indicates an "or" relationship between the related objects. The singular forms "a", "an", "said" and "the" are also intended to include the majority form, unless the context clearly indicates otherwise.

It is further understood that the terms "first", "second", etc. are used to describe various types of information, but such information should not be limited to these terms. These terms are used only to distinguish the same type of information from one another and do not indicate a particular order or level of importance. Indeed, the expressions "first", "second", etc. may be used completely interchangeably. For example, without departing from the scope of the present disclosure, the first information may also be referred to as the second information, and similarly, the second information may also be referred to as the first information.

It is further to be understood that embodiments of the present disclosure, while describing the operations in a particular order in the accompanying drawings, should not be construed as requiring that the operations be performed in the particular order shown or in a serial order, or requiring that all of the operations shown be performed in order to obtain a desired result. Multitasking and parallel processing may be advantageous in particular environments.

Other embodiments of the present disclosure will readily come to mind to those skilled in the art upon consideration of the specification and practice of the disclosure herein. The present application is intended to cover any variations, uses, or adaptations of the present disclosure that follow the general principles of the present disclosure and include common knowledge or customary technical means in the art not disclosed herein.

It is to be understood that the present disclosure is not limited to the precise structure which has been described above and illustrated in the accompanying drawings, and that various modifications and changes may be made without departing from its scope. The scope of the present disclosure is limited only by the appended claims.

## Claims

1. A method for monitoring a physical downlink control channel, performed by a terminal, comprising:
determining, in response to the terminal being configured with a first search space set and a second search space set and determining that a plurality of physical downlink control channel candidate resources exist at a time domain location overlapping with monitor occasion of a second physical downlink control channel candidate resource of the second search space set, whether or not a first physical downlink control channel candidate resource of the first search space set is monitored, wherein the first search space set has a link relationship with the second search space set, and the first physical downlink control channel candidate resource has a link relationship with the second physical downlink control channel candidate resource; and
monitoring the second physical downlink control channel candidate resource based on a monitoring priority of the second physical downlink control channel candidate resource among the plurality of physical downlink control channel candidate resources.

2. The method for monitoring a physical downlink control channel according to claim 1, wherein monitoring the second physical downlink control channel candidate resource comprises:
monitoring the second physical downlink control channel candidate resource based on a quasi-colocation QCL type D of a control resource set corresponding to the second search space set.

3. The method for monitoring a physical downlink control channel according to claim 1, wherein
in response to determining that the first physical downlink control channel candidate resource of the first search space set is monitored, the second physical downlink control channel candidate resource has the highest monitoring priority among the plurality of physical downlink control channel candidate resources.

4. The method for monitoring a physical downlink control channel according to claim 1, wherein
in response to determining that the first physical downlink control channel candidate resource of the first search space set is not monitored, the second physical downlink control channel candidate resource has the lowest monitoring priority among the plurality of physical downlink control channel candidate resources.

5. The method for monitoring a physical downlink control channel according to claim 1, wherein the monitoring priority of the second physical downlink control channel candidate resource is determined based on the second search space set corresponding to the second physical downlink control channel candidate resource.

6. The method for monitoring a physical downlink control channel according to claim 1, wherein determining whether or not the first physical downlink control channel candidate resource of the first search space set is monitored, comprises:
determining a monitoring priority of the first search space set, and determining whether or not the first physical downlink control channel candidate resource of the first search space set is monitored based on the monitoring priority.

7. The method for monitoring a physical downlink control channel according to claim 5 or 6, wherein a monitoring priority of the first search space set and/or a monitoring priority of the second search space set is determined based on attribute information of the search space set.

8. The method for monitoring a physical downlink control channel according to claim 7, wherein the attribute information of the search space set comprises at least one of the following:
a service cell index to which the search space set belongs, a type of the search space set, a search space set identification of the search space set, link relationship information of the search space set, and an identification of a search space set pair of two search space sets having a link relationship and comprising the search space set;
wherein the type of the search space set comprises a common search space set or a UE-specific search space set; and the link relationship information of the search space set comprises that the search space set does not have a link relationship with any of search space sets, or that the search space set has a link relationship with another search space set.

9. The method for monitoring a physical downlink control channel according to claim 8, wherein the identification of the search space set pair of the two search space sets having a link relationship and comprising the search space set is a network device configuration, or an identification corresponding to a search space set having a smaller search space set identification in the two search space sets.

10. The method for monitoring a physical downlink control channel according to claim 7, wherein the monitoring priority of the search space set determined based on the attribute information of the search space set satisfies at least one of the following:
the smaller a service cell index to which the search space set belongs, the higher the monitoring priority;
a monitoring priority of a common search space set is higher than a monitoring priority of a UE-specific search space set;
the smaller a search space set identification of the search space set, the higher the monitoring priority;
the smaller an identification of a search space set pair corresponding the search space set, the higher the monitoring priority;
a search space set having a link relationship with other search space set has a higher monitoring priority than a search space set not having a link relationship with other search space set;
a monitoring priority of a search space set configured with multiple transmission configuration indication states is higher than a monitoring priority of a search space set configured with only one transmission configuration indication state.

11. A device for monitoring a physical downlink control channel, applied to a terminal, comprising:
a processing unit configured to determine, in response to the terminal being configured with a first search space set and a second search space set and determining that a plurality of physical downlink control channel candidate resources exist at a time domain location overlapping with monitor occasion of a second physical downlink control channel candidate resource of the second search space set, whether or not a first physical downlink control channel candidate resource of the first search space set is monitored, wherein the first search space set has a link relationship with the second search space set, and the first physical downlink control channel candidate resource has a link relationship with the second physical downlink control channel candidate resource; and
a monitoring unit configured to monitor the second physical downlink control channel candidate resource based on a monitoring priority of the second physical downlink control channel candidate resource among the plurality of physical downlink control channel candidate resources.

12. The device for monitoring a physical downlink control channel according to claim 11, wherein in response to the processing unit determining that the first physical downlink control channel candidate resource of the first search space set is monitored, the monitoring unit determines that the second physical downlink control channel candidate resource has the highest monitoring priority among the plurality of physical downlink control channel candidate resources.

13. The device for monitoring a physical downlink control channel according to claim 11, wherein in response to determining that the first physical downlink control channel candidate resource of the first search space set is not monitored, the monitoring unit determines that the second physical downlink control channel candidate resource has the lowest monitoring priority among the plurality of physical downlink control channel candidate resources.

14. A device for monitoring a physical downlink control channel, comprising:
a processor; and
a memory for storing processor executable instructions;
wherein the processor is configured to: perform the method for monitoring a physical downlink control channel according to any one of claims 1 to 10.

15. A storage medium, wherein the storage medium has instructions stored therein, when the instructions in the storage medium are executed by a processor of a terminal, the terminal is configured to perform the method for monitoring a physical downlink control channel according to any one of claims 1 to 10.
